(19) Europäisches Patentamt
European Patent Office
Office européen des brevets

(11) **EP 4 358 033 A1**

(12) **EUROPEAN PATENT APPLICATION**
published in accordance with Art. 153(4) EPC

(43) Date of publication:
**24.04.2024 Bulletin 2024/17**

(51) International Patent Classification (IPC):
***G06V 10/774*** *(2022.01)*

(21) Application number: **22891672.2**

(52) Cooperative Patent Classification (CPC):
**G06V 10/26; G06N 3/04; G06N 3/08; G06V 10/761; G06V 10/774; G06V 10/82;** G06V 2201/03

(22) Date of filing: **26.09.2022**

(86) International application number:
**PCT/CN2022/121320**

(87) International publication number:
**WO 2023/082870 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.11.2021 CN 202111328774**

(71) Applicant: **Tencent Technology (Shenzhen) Company Limited**
**Shenzhen, Guangdong 518057 (CN)**

(72) Inventors:
• **XU, Zhe**
  **Shenzhen, Guangdong 518057 (CN)**
• **LU, Donghuan**
  **Shenzhen, Guangdong 518057 (CN)**
• **MA, Kai**
  **Shenzhen, Guangdong 518057 (CN)**
• **ZHENG, Yefeng**
  **Shenzhen, Guangdong 518057 (CN)**

(74) Representative: **AWA Sweden AB**
**Box 45086**
**104 30 Stockholm (SE)**

(54) **TRAINING METHOD AND APPARATUS FOR IMAGE SEGMENTATION MODEL, IMAGE SEGMENTATION METHOD AND APPARATUS, AND DEVICE**

(57)    A training method and apparatus for an image segmentation model, an image segmentation method and apparatus, and a device. The training method for an image segmentation model comprises: obtaining a first image, a second image, and an annotated image of the first image (201);obtaining a predicted image of the first image according to a first network model (202);obtaining a predicted image of the second image according to a second network model (203);determining a reference image of the second image on the basis of the second image and the annotated image of the first image (204);and updating model parameters of the first network model on the basis of the predicted image of the first image, the annotated image of the first image, the predicted image of the second image, and the reference image of the second image to obtain an image segmentation model (205).The number of images to be annotated is reduced, time consumption and manpower consumption are decreased, the cost is lowered, and the model training speed is increased, thereby improving the image segmentation efficiency.

Acquire a first image, a second image, and a labeled image of the first image. The labeled image includes an initial image segmentation result determined by labeling an object contained in the first image and segmenting the first image according to the labeled object, and the second image is an unlabeled image containing the object — 201

Input the first image into a first network model to obtain a first predicted image. The first predicted image includes a first image segmentation result determined by predicting a first region within the first image where the object is located and segmenting the first image according to the predicted first region — 202

Input the second image into a second network model to obtain a second predicted image. The second predicted image includes a second image segmentation result determined by predicting a second region within the second image where the object is located and segmenting the second image according to the predicted second region — 203

Determine a second reference image of the second image based on the second image and the labeled image. The second reference image includes a third image segmentation result determined by measuring similarity between the second image and the labeled image and segmenting the second image according to the measured similarity — 204

Adjust a first model parameter of the first network model based on the first predicted image, the labeled image, the second predicted image, and the second reference image, in order to update the first network model — 205

FIG. 2

EP 4 358 033 A1

**Description**

RELATED APPLICATION

This disclosure claims priority to Chinese Patent Application No. 202111328774.3 filed on November 10, 2021 and entitled "IMAGE SEGMENTATION MODEL TRAINING METHOD AND APPARATUS, IMAGE SEGMENTATION METHOD AND APPARATUS, AND DEVICE", which is incorporated by reference in its entirety.

FIELD OF THE TECHNOLOGY

Embodiments of this disclosure relate to the field of artificial intelligence technologies, and in particular, to an image segmentation model training method and apparatus, and an image segmentation method and apparatus, and a device.

BACKGROUND OF THE DISCLOSURE

With the development of artificial intelligence technologies, a network model is applied more and more widely. For example, the network model is applied to the field of image processing technologies, and a target region in an image is recognized through the network model. This network model configured to recognize the target region in the image is referred to as an image segmentation model.

In a related technology, a large quantity of images need to be acquired. These images are labeled manually to obtain a training sample set, and the image segmentation model is acquired based on the training sample set. However, it takes a large amount of time and manpower to manually label an image, which increases the manpower cost, and meanwhile, affects the training speed of an image segmentation model, thereby affecting the image segmentation efficiency.

SUMMARY

Embodiments of this disclosure provide an image segmentation model training method and apparatus, an image segmentation method and apparatus, and a device, which can be used for solving the problems of high consumption of time and manpower in a related technology, low training speed of an image segmentation model, and low image segmentation efficiency. The technical solution includes the following content.

In one aspect, an embodiment of this disclosure provides an image segmentation model training method, executable by an electronic device, including:

    acquiring a first image, a second image, and a labeled image of the first image, the labeled image comprising an initial image segmentation result determined by labeling an object contained in the first image and segmenting the first image according to the labeled object, the second image being an unlabeled image containing the object;

    inputting the first image into a first network model to obtain a first predicted image, the first predicted image comprising a first image segmentation result determined by predicting a first region within the first image where the object is located and segmenting the first image according to the predicted first region;

    inputting the second image into a second network model to obtain a second predicted image, the second predicted image comprising a second image segmentation result determined by predicting a second region within the second image where the object is located and segmenting the second image according to the predicted second region;

    determining a second reference image of the second image based on the second image and the labeled image, the second reference image comprising a third image segmentation result determined by measuring similarity between the second image and the labeled image and segmenting the second image according to the measured similarity; and

    adjusting a first model parameter of the first network model based on the first predicted image, the labeled image, the second predicted image, and the second reference image, in order to update the first network model.

In another aspect, an embodiment of this disclosure provides an image segmentation method, including:

    acquiring an image to be segmented; and

acquiring an image segmentation result of the image to be segmented according to an image segmentation model, the image segmentation model being determined based on any of the above image segmentation model training methods.

In another aspect, an embodiment of this disclosure provides an image segmentation model training apparatus, including:

an acquisition module, configured to acquire a first image, a second image, and a labeled image of the first image, the labeled image comprising an initial image segmentation result determined by labeling an object contained in the first image and segmenting the first image according to the labeled object, the second image being an unlabeled image containing the object;

the acquisition module being further configured to input the first image into a first network model to obtain a first predicted image, the first predicted image comprising a first image segmentation result determined by predicting a first region within the first image where the object is located and segmenting the first image according to the predicted first region;

the acquisition module being further configured to input the second image into a second network model to obtain a second predicted image, the second predicted image comprising a second image segmentation result determined by predicting a second region within the second image where the object is located and segmenting the second image according to the predicted second region; and

a determination module, configured to determine a second reference image of the second image based on the second image and the labeled image, the second reference image comprising a third image segmentation result determined by measuring similarity between the second image and the labeled image and segmenting the second image according to the measured similarity;

the determination module being further configured to adjust a first model parameter of the first network model based on the first predicted image, the labeled image, the second predicted image, and the second reference image, in order to update the first network model.

In another aspect, an embodiment of this disclosure provides an image segmentation apparatus, including:

a first acquisition module, configured to determine an image to be segmented; and

a second acquisition module, configured to acquire an image segmentation result of the image to be segmented according to an image segmentation model, the image segmentation model being determined based on any one of the above image segmentation model training methods.

In another aspect, an embodiment of this disclosure provides an electronic device. The electronic device includes a processor and a memory, the memory stores at least one computer program, and at least one computer program is loaded and executed by the processor to enable the electronic device to implement any of the above image segmentation model training methods or image segmentation methods.

In another aspect, a non-volatile computer-readable storage medium is further provided. The non-volatile computer-readable storage medium stores at least one computer program. The at least one computer program is loaded and executed by a processor to enable a computer to implement any of the above image segmentation model training methods or image segmentation methods.

In another aspect, a computer program or a computer program product is further provided. The computer program or the computer program product stores at least one computer instruction. The at least one computer instruction is loaded and executed by a processor to enable a computer to implement any of the above image segmentation model training methods or image segmentation methods.

According to the technical solution provided by the embodiments of this disclosure, the second reference image is determined based on the second image and the labeled image of the first image. The second reference image is an image segmentation result determined by calculating the second image under the guidance of the labeled image of the first image, which can provide supervisory information for the second predicted image and propagate the image segmentation result determined by labeling to an unlabeled image, thereby reducing the quantity of images that need to be labeled, reducing time consumption and manpower consumption, and reducing the cost. After that, the image segmentation model is determined through the predicted image and the labeled image of the first image and the predicted image and the second reference image, which accelerates the training speed of the image segmentation model and improves the image segmentation efficiency.

BRIEF DESCRIPTION OF THE DRAWINGS

FIG. 1 is a schematic diagram of an implementation environment of an image segmentation model training method or an image segmentation method provided by an embodiment of this disclosure.

FIG. 2 is a flowchart of an image segmentation model training method provided by an embodiment of this disclosure.

FIG. 3 is a flowchart of an image segmentation method provided by an embodiment of this disclosure.

FIG. 4 is a schematic diagram of training of an image segmentation model provided by an embodiment of this disclosure.

FIG. 5 is a schematic diagram of an image segmentation result of a brain tumor image provided by an embodiment of this disclosure.

FIG. 6 is a schematic diagram of an image segmentation result of a kidney image provided by an embodiment of this disclosure.

FIG. 7 is a schematic structural diagram of an image segmentation model training apparatus provided by an embodiment of this disclosure.

FIG. 8 is a schematic structural diagram of an image segmentation apparatus provided by an embodiment of this disclosure.

FIG. 9 is a schematic structural diagram of a terminal device provided by an embodiment of this disclosure.

FIG. 10 is a schematic structural diagram of a server provided by an embodiment of this disclosure.

DESCRIPTION OF EMBODIMENTS

To make the objectives, technical solutions, and advantages of this disclosure clearer, the following further describes implementations of this disclosure in detail with reference to the drawings.
In a related technology, a large number of images are artificially labeled to determine a training sample set, and then an image segmentation model is acquired based on the training sample set. However, for the technical fields such as medical imaging, it takes a large amount of time and manpower to artificially label an image, which increases the manpower cost, and meanwhile, affects the training speed of an image segmentation model, thereby affecting the image segmentation efficiency. Embodiments of this disclosure provide an image segmentation model training method and an image segmentation method, which can solve the problems of high consumption of time and manpower, low training speed of an image segmentation model, and low image segmentation efficiency.

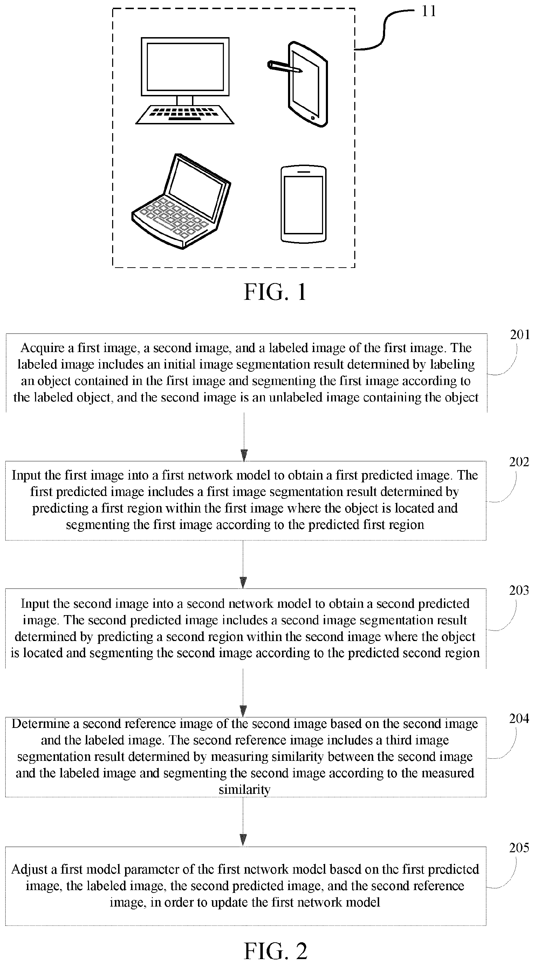

FIG. 1 is a schematic diagram of an implementation environment of an image segmentation model training method or an image segmentation method provided by an embodiment of this disclosure. As shown in FIG. 1, the implementation environment includes an electronic device 11. The image segmentation model training method or the image segmentation method in the embodiment of this disclosure may be performed by the electronic device 11. In some embodiments, the electronic device 11 may include at least one of a terminal device or a server.
The terminal device may be at least one of a smart phone, a game console, a desktop computer, a tablet computer, an e-book reader, a moving picture experts group audio layer III (MP3) player, a moving picture experts group audio layer IV (MP4) player, a laptop portable computer, a wearable device, a smart vehicle machine, a smart television, a smart speaker, and a vehicle terminal.
The server may be any one of an independent server, a server cluster composed of a plurality of servers, or a cloud computing platform and a virtualization center. No limits are made thereto in the embodiment of this disclosure. The server may be in communication connection with the terminal device in through a wired network or a wireless network. The server may have the functions of data processing, data storage, data transceiving, and the like. No limits are made thereto in the embodiment of this disclosure.

The image segmentation model training method or the image segmentation method of various optional embodiments of this disclosure is implemented based on artificial intelligence technologies.

An embodiment of this disclosure provides an image segmentation model training method. The method may be applied to the implementation environment as shown in FIG. 1. Taking the flowchart of the image segmentation model training method provided by an embodiment of this disclosure shown in FIG. 2 as an example, the method may be performed by the electronic device 11 shown in FIG. 1. As shown in FIG. 2, the method includes step 201 to step 205.

Step 201: Acquire a first image, a second image, and a labeled image of the first image. The labeled image includes an initial image segmentation result determined by labeling an object contained in the first image and segmenting the first image according to the labeled object, and the second image is an unlabeled image containing the object.

In some embodiments, the quantity of the first images is at least one. Any first image has the labeled image of the first image. The labeled image of the first image is determined by labeling a target object contained in the first image and then segmenting the first image according to the labeled object. For example, the target object may be a vehicle, a building, a tumor, and a kidney, etc., and the labeling may be finished manually. The segmenting may refer to identifying a region wherein the labeled object is located by using a drawing model to draw an edge line along the boundary of the labeled object. Then, the first image is segmented into two parts via the edge line, i.e., the region wherein the labeled object is located, and the remained region within the first image. For example, the initial image segmentation result includes a kidney region and the remained region. The initial image segmentation result is a standard image segmentation result corresponding to the first image, and can provide supervisory information for a first image segmentation result corresponding to the first image by prediction.

In some embodiments, the quantity of the second images is also at least one. It may be understood that the quantity of the second images is greater than, or equal to, or less than that of the first images. Due to the same processing manner for each first image, according to various optional embodiments of this disclosure, the processing manner for each first image will be introduced from the perspective of the first image. Due to the same processing manner for each second image, according to various optional embodiments of this disclosure, the processing manner for each second image will be introduced from the perspective of the second image.

In some embodiments, a labeled image set and an unlabeled image set are acquired. Each image in both the labeled image set and the unlabeled image set contains the same object. The labeled image set includes a first image and a labeled image of the first image. The unlabeled image set includes a second image. In the embodiment of this disclosure, a training data set includes the labeled image set and the unlabeled image set. The labeled image set includes M first image and a labeled image of each first image. The unlabeled image set includes M-N second image. The sum of the quantities of the first image and the second image is N. Both N and M are positive integers.

The labeled image set may be represented as

$$S_L = \left\{ \left( X_{l(i)}, Y_{l(i)} \right) \right\}_{i=1}^{M}$$

, $X_{l(i)}$ is an $i^{th}$ first image, $Y_{l(i)}$ is the labeled image of the $i^{th}$ first image, the unlabeled image set may be represented as

$$S_U = \left\{ \left( X_{u(i)} \right) \right\}_{i=M+1}^{N}$$

, and $X_{u(i)}$ is an $i^{th}$ second image.

In some embodiments, both the first image and the second image are two-dimensional images or three-dimensional images. The minimum segmentation unit of the two-dimensional image is a pixel, and the minimum segmentation unit of the three-dimensional image is a voxel (that is, a volume element). According to some embodiments, both the first image and the second image may be three-dimensional images. However, this is only an example and, according to some embodiments, the first image and/or the second image may be two-dimensional images or other types of images. Herein, for convenience, it is assumed that both the first and second images are three-dimensional (3D) images. The implementation principle of both the first image and the second image being two-dimensional images is similar to that of both the first image and the second image being three-dimensional images. Details are not described herein again.

In the embodiment of this disclosure, $X_{l(i)}, X_{u(i)} \in R^{H \times W \times D}$, $Y_{l(i)} \in \{0,1\}^{H \times M \times D}$, R represents a real number, H represents the height of a three-dimensional image, W represents a width of a three-dimensional image, and D represents a depth of a three-dimensional image.

Step 202: Input the first image into a first network model to obtain a first predicted image. The first predicted image includes a first image segmentation result determined by predicting a first region within the first image where the object is located and segmenting the first image according to the predicted first region.

In some embodiments, the first network model includes an encoder and a decoder. The first image is input into the first network model. A feature map of the first image is extracted by the encoder of the first network model. The first predicted image is determined by the decoder of the first network model to predict a first region within the first image where the object is located based on the first feature map and then to segment the first image into the predicted first region and the remained region. The first feature map includes a voxel feature of each voxel in the first image. Therefore, the first feature map can characterize semantic information of the first image.

In the embodiment of this disclosure, a first model parameter is recorded as θ, and the first model parameter includes a model parameter of the encoder and a model parameter of the decoder.

Step 203: Input the second image into a second network model to obtain a second predicted image. The second predicted image includes a second image segmentation result determined by predicting a second region within the second image where the object is located and segmenting the second image according to the predicted second region.

In some embodiments, the second network model includes an encoder and a decoder. The second image is input into the second network model. A feature map of the second image is extracted by the encoder of the second network model. The second predicted image is determined by the decoder of the second network model to predicting a second region within the second image where the object is located based on the second feature map, and then to segment the second image into the predicted second region and the remained region. The second feature map includes a voxel feature of each voxel in the second image. Therefore, the second feature map can characterize semantic information of the second image.

In the embodiment of this disclosure, a model parameter of the second network model is recorded as $\tilde{\theta}$, and the model parameter of the second network model includes a model parameter of the encoder and a model parameter of the decoder. The model parameter of the second network model may be the same as the first model parameter (that is, the second network model is the first network model). The model parameter of the second network model may also be different from the first model parameter (that is, the second network model and the first network model are two different models, In some embodiments, the first network model is a student model, and the second network model is a teacher model).

In some embodiments, the model parameter of the second network model is determined based on the first model parameter. In an exemplary embodiment, the first model parameter may be directly taken as the model parameter of the second network model.

In the embodiment of this disclosure, the first network model may serve as a student model, and the second network model may serve as a teacher model. The model parameter of the teacher model is determined through the model parameter of the student model, and a self-integrated teacher model is constructed based on the student model, which can improve the accuracy of a predicted result of the teacher model.

In some embodiments, a model parameter of a third network model is adjusted based on the first model parameter according to an exponential moving average (EMA) method to determine a model parameter of the second network model. In some embodiments, a first weight of the third model parameter and a second weight of the first model parameter are determined, and the third model parameter and the first model parameter are summed using the first weight and the second weight to determine the model parameter of the second network model. The first weight and the second weight may be set according to experience, or may be determined according to a decay rate, and the like. In some embodiments, the decay rate is a value in the range of 0 to 1. The first weight may be the decay rate, and the second weight may be a difference between a reference value (for example, 1) and the decay rate. For example, the model parameter of the second network model may be represented by using the following formula (1).

$$\tilde{\theta}_t = \alpha\tilde{\theta}_{t-1} + (1-\alpha)\theta_t \qquad \text{Formula (1)}$$

Where, $\tilde{\theta}_t$ is the model parameter of the second network model, $\tilde{\theta}_{t-1}$ is the third model parameter, $\theta_t$ is the first model parameter, and $\alpha$ is the decay rate. The embodiment of this disclosure does not limit the value of the decay rate. In some embodiments, the value of the decay rate is 0.99.

It is to be understood that since the first network model includes the encoder and the decoder, the second network model also includes the encoder and the decoder, and the second network model is determined by adjusting the third model parameter, the third network model also includes an encoder and a decoder. In Formula (1), $\tilde{\theta}_t$ may be the model parameter of the encoder (or the decoder) of the second network model, $\tilde{\theta}_{t-1}$ may be the encoder (or the decoder) of the third network model, and $\theta_t$ may be the model parameter of the encoder (or the decoder) of the first network model.

Step 204: Determine a second reference image of the second image based on the second image and the labeled image. The second reference image includes a third image segmentation result determined by measuring similarity between the second image and the labeled image and segmenting the second image according to the measured similarity.

In the embodiment of this disclosure, the second reference image may be determined based on the second image and the labeled image of the first image. That is, for any second image, a reference image of the any second image may be determined based on the any second image and a labeled image of any first image. The second reference image includes the third image segmentation result under the guidance of the labeled image of the first image, which can represent a true image segmentation result of the second image to a great extent, thereby providing supervisory information for the second image segmentation result determined by predicting the second image, propagating the image segmentation result determined by labeling in the labeled data set to an unlabeled image, reducing the quantity of images that need to be labeled, reducing the training cost of the image segmentation model, and improving the training efficiency of the image segmentation model.

In some embodiments, the step that a second reference image is determined based on the second image and the labeled image includes: determining a first foreground prototype of the first image and a first background prototype of the first image based on the labeled image, the first foreground prototype being a reference feature of the first region in the first image, and the first background prototype being a reference feature of another region except the first region in the first image; and determining the second reference image based on the first foreground prototype, the first background prototype, and the second image.

In some embodiments, the first image includes the first region and another region except the first region. The first region in the first image may be referred to as a foreground region of the first image. The foreground region is a region where a target object (for example, a vehicle, a building, a tumor, and a kidney) is located. Another region except the first region in the first image may be referred to a background region of the first image. The background region is a region that does not include the target object. In all embodiments of the present disclosure, image segmentation processing performed on the first image is the processing for segmenting the first image into the foreground region and the background region. The target object is an object of interest during an image segmentation process, and the type of target object may be flexibly adjusted according to an actual image segmentation scenario.

In the embodiment of this disclosure, various voxels of the foreground region have similar voxel features. Any voxel of the foreground region may be expressed by using one voxel feature. This voxel feature may be referred to as a reference feature. Based on the same principle, various voxels of the background region also have similar voxel features. Any voxel of the background region may be expressed by using another reference feature.

In the embodiment of this disclosure, the reference feature of the foreground region of the first image is referred to as the first foreground prototype. The reference feature of the background region of the first image may be referred to as the first background prototype. The first foreground prototype and the first background prototype may be determined based on the first image and the labeled image of the first image.

In some embodiments, the step of determining a first foreground prototype of the first image and a first background prototype of the first image based on the labeled image includes: acquiring a first feature map of the first image, the first feature map being used for characterizing semantic information of the first image; and determining the first foreground prototype and the first background prototype based on the first feature map and the labeled image.

In the embodiment of this disclosure, the first image is input into the first network model. The first feature map is extracted by the encoder of the first network model. Cross multiplication processing is performed on the first feature map and the labeled image of the first image to determine a feature segmentation map of the first image. The feature segmentation map is a feature map in which the voxel feature of the foreground region and the voxel feature of the background region have been segmented. The first foreground prototype is determined based on the voxel feature of the foreground region of the first image. The first background prototype is determined based on the voxel feature of the background region of the first image.

The above operation of determining the first foreground prototype and the first background prototype may also be referred to as a mask average pooling operation. The mask average pooling operation is to mask the voxel feature of the foreground region (or the voxel feature of the background region) extracted by the encoder by segmenting and labeling to determine the background prototype or the foreground prototype, so as to measure the similarity between the labeled image set and the unlabeled image set through non-parametric metric learning based on the first foreground prototype and the background prototype in the labeled image set, thereby segmenting the unlabeled image set.

In an exemplary embodiment, the quantity of the first images is one, and a process that the determining the first foreground prototype and the first background prototype based on the first feature map and the labeled image includes: determining, in the first feature map, voxel features of first voxels with spatial positions located in the first region and voxel features of second voxels with spatial positions located in the another region except the first region in the first image based on the labeled image; taking an average value of the voxel features of the first voxels as the first foreground prototype; and taking an average value of the voxel features of the second voxels as the first background prototype.

In an exemplary embodiment, the quantity of the first images may also be multiple. In this case, an average value of the foreground prototypes of various first images may be taken as the first foreground prototype, and an average value of the background prototypes of various first images may be taken as the first background prototype.

In the embodiment of this disclosure, the feature map of the $k^{th}$ first image $X_{I(k)}$ is recorded as $F_{I(k)}$, the labeled image of the $k^{th}$ first image is recorded as $Y_{I(k)}$, the foreground region of the $k^{th}$ first image is recorded as $C_{fg}$, the spatial position of any voxel in the $k^{th}$ first image is recorded as $(x, y, z)$, the first foreground prototype is determined according to Formula (2) as follows, and the first background prototype is determined according to Formula (3) as follows through the mask average pooling operation.

7

$$p_{l(fg)} = \frac{1}{K}\sum_k \frac{\sum_{x,y,z} F_{l(k)}^{(x,y,z)} 1\left[Y_{l(k)}^{(x,y,z)} \in C_{fg}\right]}{\sum_{x,y,z} 1\left[Y_{l(k)}^{(x,y,z)} \in C_{fg}\right]} \qquad \text{Formula (2)}$$

$$p_{l(bg)} = \frac{1}{K}\sum_k \frac{\sum_{x,y,z} F_{l(k)}^{(x,y,z)} 1\left[Y_{l(k)}^{(x,y,z)} \notin C_{fg}\right]}{\sum_{x,y,z} 1\left[Y_{l(k)}^{(x,y,z)} \notin C_{fg}\right]} \qquad \text{Formula (3)}$$

Where, $p_{l(fg)}$ is the first foreground prototype, K (K is an integer not less than 1) is the quantity of the first images, $F_{l(k)}^{(x,y,z)}$ is the voxel feature of the voxel with a spatial position of (x, y, z) in the feature map of the k$^{th}$ (k is any integer value from 1 to K) first image, $Y_{l(k)}^{(x,y,z)}$ is voxel information of the voxel with a spatial position of (x, y, z) in the labeled image of the k$^{th}$ first image, 1[·] is an indicator function that returns a value of 1 in response to a condition being satisfied, and $p_{l(bg)}$ is the first background prototype.

The first feature map needs to be subjected to upsampling processing through tri-linear interpolation, so that the feature map after the upsampling processing of the first image and the labeled image of the first image are consistent in size. The embodiment of this disclosure does not limit a specific manner of the tri-linear interpolation.

In some embodiments, the step of determining the second reference image based on the first foreground prototype, the first background prototype, and the second image includes: acquiring a second feature map of the second image, the second feature map being used for characterizing semantic information of the second image; and determining the second reference image based on the first foreground prototype, the first background prototype, and the second feature map.

In the embodiment of this disclosure, the second image is input into the second network model. The second feature map is extracted by the encoder of the second network model. Then, the similarity between the second feature map and the first foreground prototype is calculated or the similarity between the second feature map and the first background prototype is calculated based on the first foreground prototype, the first background prototype, and the second feature map to determine a similarity result. After that, normalization processing is performed on the similarity result by using a normalized exponential function (for example, a Softmax function) to determine the second reference image.

The above operation of determining the second reference image may also be referred to as an operation based on a non-parametric metric learning mechanism. The similarity between the second reference image and the unlabeled image set is measured through non-parametric metric learning, so as to segment the unlabeled image set.

In an exemplary embodiment, the first region is a foreground region, the another region is background region, a process that the determining the second reference image based on the first foreground prototype, the first background prototype, and the second feature map includes: for each voxel in the second image, determining a voxel feature of the respective voxel based on the second feature map; calculating a first similarity between the voxel feature of the respective voxel and the first foreground prototype and a second similarity between the voxel feature of the respective voxel and the first background prototype; determining a first probability that the respective voxel belongs to the foreground region based on the first similarity; determining a second probability that the respective voxel belongs to the background region based on the second similarity; determining a segmentation result of the respective voxel based on the first probability and the second probability; and determining the second reference image based on the segmentation result of each voxel in the second image. The segmentation result of the respective voxel includes the first probability and the second probability, and the second image is segmented by determining whether each voxel is located in the foreground region or the background region. The segmented second image is regarded as the second reference image.

In some embodiments, the first probability that the any voxel belongs to the foreground region is in a positive correlation relationship with the similarity between the voxel feature of the any voxel and the first foreground prototype. The second probability that the any voxel belongs to the background region is in a positive correlation relationship with the similarity between the voxel feature of the any voxel and the first background prototype.

In the embodiment of this disclosure, the function used for calculating the similarity is recorded as a distance function $d(·)$, the second feature map is recorded as $F_u$, and the spatial position of any voxel in the feature map in the second image is recorded as (x, y, z). The foreground region of the first image is $p_{l(fg)}$, the first background prototype is $p_{l(bg)}$, and $P_l = \{p_{l(fg)}\} \cup \{p_{l(bg)}\}$ is satisfied. For each $P_{l(j \in (fg,bg))} \in P_l$, the second reference image is determined according to Formula (4) as follows.

$$P_{l2u(j)}^{(x,y,z)} = \frac{exp\left(-\alpha d\left(F_u^{(x,y,z)}, p_{l(j)}\right)\right)}{\Sigma_{p_{l(j)} \in P_l} exp\left(-\alpha d\left(F_u^{(x,y,z)}, p_{l(j)}\right)\right)} \qquad \text{Formula (4)}$$

Where, $P_{l2u(j)}^{(x,y,z)}$ is a segmentation result of a voxel with a spatial position of (x, y, z) in the second reference image. In response to j being fg, the segmentation result refers to the third probability that the voxel with the spatial position of (x, y, z) in the second reference image belongs to the foreground region; in response to j being bg, the segmentation result refers to the fourth probability that the voxel with the spatial position of (x, y, z) in the second reference image belongs to the background region; and exp is an exponential function, $d(\cdot)$ is a distance function, an opposite number of the distance calculated according to the distance function is taken as the similarity, $F_u^{(x,y,z)}$ is the voxel feature of the voxel with the spatial position of (x, y, z) in the second feature map, $p_{l(j)}$ is the first foreground prototype or the first background prototype, $P_l$ includes the first foreground prototype and the first background prototype, $\Sigma$ is a symbol of a summation function, and $\alpha$ is a proportionality coefficient. The embodiment of this disclosure does not limit a specific value of the proportionality coefficient. In some embodiments, the proportionality coefficient is 20.

The second feature map needs to be subjected to upsampling processing through tri-linear interpolation. The embodiment of this disclosure does not limit a specific manner of the tri-linear interpolation. In addition, the embodiment of this disclosure does not limit a distance function. In some embodiments, the distance function is a function of cosine distance.

Step 205: Adjust a first model parameter of the first network model based on the first predicted image, the labeled image, the second predicted image, and the second reference image, in order to update the first network model.

In the embodiment of this disclosure, updating processing is performed by adjusting a first model parameter of the first network model based on the first predicted image, the labeled image of the first image, the second predicted image, and the second reference image, so as to determine an updated first network model. If a training end condition is satisfied, the updated first network model is taken as an image segmentation model. If the training end condition is not satisfied, the updated first network model is taken as the first network model of next training, and steps from step 201 (or step 202) to step 205 are performed again until the image segmentation model is determined. That is, the image segmentation model is determined according to the first network model.

The embodiment of this disclosure does not limit the satisfaction of the training end condition. In some embodiments, the satisfaction of the training end condition is that the number of times of training reaches a target number of times. A value of the target number of times may be flexibly set according to artificial experience or actual scenarios, which is not limited herein. In some embodiments, the first model parameter is updated by using a loss value of the first network model. The satisfaction of the training end condition may also be that the loss value of the first network model is not less than a loss threshold value, or that the loss value of the first network model converges. The loss threshold value may be flexibly set according to artificial experience or actual scenarios, which is not limited herein.

In some embodiments, the step of adjusting a first model parameter of the first network model based on the first predicted image, the labeled image, the second predicted image, and the second reference image includes: determining a loss value of the first network model based on the first predicted image, the labeled image, the second predicted image, and the second reference image; and updating the first model parameter based on the loss value of the first network model.

In the embodiment of this disclosure, the loss value of the first network model may be determined based on the first predicted image, the labeled image of the first image, the second predicted image, and the second reference image first. Then, the first model parameter is adjusted according to the loss value of the first network model to perform updating processing on the first network model once to determine an updated first network model and determine the image segmentation model based on the updated first network model.

In some embodiments, the step of determining a loss value of the first network model based on the first predicted image, the labeled image, the second predicted image, and the second reference image includes: determining a first loss value based on the first predicted image and the labeled image; determining a second loss value based on the second predicted image and the second reference image; and determining the loss value of the first network model based on the first loss value and the second loss value.

In the embodiment of this disclosure, the first predicted image and the labeled image of the first image are input into a first loss function to determine the first loss value. The first loss function is also referred to as a supervisory loss function. The embodiment of this disclosure does not limit the first loss function. The first loss function includes at least one type of function. In some embodiments, one first sub-loss value is acquired according to each type of function based on the first predicted image and the labeled image of the first image, and a weighted sum of various first sub-loss values is taken as the first loss value. During calculating the weighted sum, the weights corresponding to various first sub-loss values may be set according to experience, or flexibly adjusted according to an actual scenario. The embodiment of this disclosure does not limit this.

In some embodiments, the first loss value may be determined according to Formula (5) as follows.

$$L_s = 0.5 * L_{ce}(Y_l, Q_l) + 0.5 * L_{Dice}(Y_l, Q_l) \qquad \text{Formula (5)}$$

Where, $L_s$ is the first loss value, $L_{ce}$ is a function symbol of a cross entropy loss function, $Y_l$ is the first predicted image, $Q_l$ is the labeled image of the first image, $L_{Dice}$ is a function symbol of a Dice loss function, and the Dice loss function is a set similarity metric function, which may be used for calculating the similarity between two samples. In Formula (5), the cross entropy loss function and the Dice loss function are two different types of functions. The weights corresponding to the first sub-loss values ($L_{ce}(Y_l, Q_l)$ and $L_{Dice}(Y_l, Q_l)$) determined by calculating according to the two types of functions are both 0.5.

In the embodiment of this disclosure, the second predicted image and the second reference image are input into a second loss function to determine the second loss value. The second loss function is also referred to as a forward prototype consistency loss function. The embodiment of this disclosure does not limit the second loss function. In some embodiments, the second loss function may be a mean-square error (MSE) loss function, that is, an MSE between the second predicted image and the second reference image is taken as the second loss value. In some embodiments, the second loss value may be a cross entropy loss function, that is, a cross entropy between the second predicted image and the second reference image is taken as the second loss value.

In some embodiments, taking the second loss value being the mean square error loss function as an example, the second loss value may be determined according to Formula (6) as follows.

$$L_{fpc} = L_{mse}(P_{l2u}, P_u) \qquad \text{Formula (6)}$$

Where, $L_{fpc}$ is the second loss value, $L_{mse}$ is a function symbol of the MSE loss function, $P_{l2u}$ is the second reference image, and $P_u$ is the second predicted image.

The loss value of the first network model is determined based on the first loss value and the second loss value after the first loss value and the second loss value are determined. In some embodiments, the loss value of the first network model is determined based on the first loss value, the weight of the first loss value, the second loss value, and the weight of the second loss value, and the embodiment of this disclosure does not limit the weight of the first loss value and the weight of the second loss value.

In some embodiments, the step of determining a loss value of the first network model based on the first predicted image, the labeled image, the second predicted image, and the second reference image includes: determining the loss value of the first network model based on the first model parameter, a second model parameter of the second network model, the first predicted image, the labeled image, the second predicted image, and the second reference image.

In the embodiment of this disclosure, the first model parameter and the model parameter of the second network model are acquired first. The relationship between the model parameter of the second network model and the first model parameter has been described hereinabove. Details are not described herein again.

The first loss value is determined based on the first model parameter, the first predicted image, and the labeled image of the first image in response to determining the first loss value. The second loss value is determined based on the first model parameter, the model parameter of the second network model, the second predicted image, and the second reference image in response to determining the second loss value. After that, the loss value of the first network model is determined based on the first loss value and the second loss value.

In some embodiments, after inputting the second image into a second network model to obtain a second predicted image, the method further includes: determining a first reference image of the first image based on the first image and the second predicted image; and the step of determining a loss value of the first network model based on the first predicted image, the labeled image, the second predicted image, and the second reference image includes: determining the loss value of the first network model based on the first predicted image, the labeled image, the first reference image, the second predicted image, and the second reference image. The first reference image is additionally considered during determining the loss value of the first network model, which enriches the types of images that affect the loss value and is beneficial to improving the reliability of the loss value, thereby improving the training effect of the image segmentation model.

In the embodiment of this disclosure, the first reference image may be determined based on the first image, the second image, and the second predicted image. That is, for any first image, a reference image of the any first image may be determined based on the any first image, any second image, and the predicted image of the any second image.

In some embodiments, the step that determining a reference image of the first image based on the first image and the second predicted image includes: determining a second foreground prototype of the second image and a second background prototype of the second image based on the second predicted image, the second foreground prototype being a reference feature of the second region in the second image, and the second background prototype being a reference feature of another region except the second region in the second image; and determining the first reference image based on the second foreground prototype, the second background prototype, and the first image.

The second image includes the second region and another region except the second region. The second region in the second image may be referred to as a foreground region of the second image. The foreground region is a region where a target object (for example, a vehicle, a building, a tumor, and a kidney) is located. Another region except the second region in the second image may be referred to a background region of the second image. The background region is a region that does not include the target object. In all embodiments of the present disclosure, image segmentation processing performed on the second image is the processing for segmenting the second image into the foreground region and the background region.

In the embodiment of this disclosure, various voxels of the foreground region have similar voxel features. Any voxel of the foreground region may be expressed by using one voxel feature. This voxel feature may be referred to as a reference feature. Based on the same principle, various voxels of the background region also have similar voxel features. Any voxel of the background region may be expressed by using another reference feature.

In the embodiment of this disclosure, the reference feature of the foreground region of the second image is referred to as the second foreground prototype. The reference feature of the background region of the second image may be referred to as the second background prototype. The second foreground prototype and the second background prototype may be determined based on the second image and the second predicted image.

In some embodiments, the step of determining a second foreground prototype of the second image and a second background prototype of the second image based on the second predicted image includes: acquiring a second feature map of the second image; and determining the second foreground prototype and the second background prototype based on the second feature map and the second predicted image.

In the embodiment of this disclosure, the second image is input into the second network model. The second feature map is extracted by the encoder of the second network model. Cross multiplication processing is performed on the second feature map and the second predicted image to determine a feature segmentation map of the second image. The feature segmentation map is a feature map in which the voxel feature of the foreground region and the voxel feature of the background region have been segmented. The second foreground prototype is determined based on the voxel feature of the foreground region of the second image. The second background prototype is determined based on the voxel feature of the background region of the second image.

The above operation of determining the second foreground prototype and the second background prototype may also be referred to as a mask average pooling operation. By the mask average pooling operation, the similarity between the unlabeled image set and the labeled image set is measured through non-parametric metric learning based on the foreground prototype and the background prototype in the unlabeled image set, thereby segmenting the unlabeled image set.

In the embodiment of this disclosure, the second predicted image satisfies Formula (7) as follows.

$$\hat{Y}_u = argmax_{j \in \{bg, fg\}}\left(P_{u(j)}\right) \qquad \text{Formula (7)}$$

Where, $\hat{Y}_u$ is the second predicted image; in response to $j \in bg$, $P_{u(j)}$ is a background region in the second predicted image (that is, a background region of the second image); in response to $j \in fg$, $P_{u(j)}$ is a foreground region in the second predicted image (that is, a foreground region of the second image); and argmax is a symbol of function for solving a parameter of the function.

In an exemplary embodiment, the quantity of the second images is one, and a process of determining the second foreground prototype and the second background prototype based on the second feature map and the second predicted image includes: determining, in the second feature map, voxel features of third voxels with spatial positions located in the second region and voxel features of fourth voxels with spatial positions located in the another region except the second region in the second image based on the second predicted image; and taking an average value of the voxel features of the third voxels as the second foreground prototype; and taking an average value of the voxel features of the fourth voxels as the second background prototype. The spatial position is in the background region, which means that the spatial position is not in the foreground region.

In an exemplary embodiment, the quantity of the second images may also be multiple. In this case, an average value of the foreground prototypes of various second images may be taken as the second foreground prototype, and an average value of the background prototypes of various second images may be taken as the second background prototype.

In the embodiment of this disclosure, the feature map of the k$^{th}$ second image $X_{u(k)}$ is recorded as $F_{u(k)}$, the predicted image of the k$^{th}$ second image is recorded as $\hat{Y}_{u(k)}$, the foreground region of the k$^{th}$ second image is recorded as $C_{fg}$, the spatial position of any voxel in the k$^{th}$ second image is recorded as $(x, y, z)$, the second foreground prototype is determined according to Formula (8-1) as follows, and the second background prototype is determined according to Formula (8-2) as follows through the mask average pooling operation.

$$p_{u(fg)} = \frac{1}{K} \sum_k \frac{\sum_{x,y,z} F_{u(k)}^{(x,y,z)} 1\left[\hat{Y}_{u(k)}^{(x,y,z)} \in C_{fg}\right]}{\sum_{x,y,z} 1\left[\hat{Y}_{u(k)}^{(x,y,z)} \in C_{fg}\right]} \qquad \text{Formula (8-1)}$$

$$p_{u(bg)} = \frac{1}{K} \sum_k \frac{\sum_{x,y,z} F_{u(k)}^{(x,y,z)} 1\left[\hat{Y}_{u(k)}^{(x,y,z)} \notin C_{fg}\right]}{\sum_{x,y,z} 1\left[\hat{Y}_{u(k)}^{(x,y,z)} \notin C_{fg}\right]} \qquad \text{Formula (8-2)}$$

Where, $p_{u(fg)}$ is the second foreground prototype, K (K is an integer not less than 1) is the quantity of the second images, $F_{u(k)}^{(x,y,z)}$ is the voxel feature of the voxel with a spatial position of $(x, y, z)$ in the feature map of the k$^{th}$ (k is any integer value from 1 to K) second image, $\hat{Y}_{u(k)}^{(x,y,z)}$ is voxel information of the voxel with a spatial position of $(x, y, z)$ in the predicted image of the k$^{th}$ second image, 1[·] is an indicator function that returns a value of 1 in response to a condition being satisfied, and $p_{u(bg)}$ is the second background prototype.

The second feature map needs to be subjected to upsampling processing through tri-linear interpolation, so that the feature map after the upsampling processing of the second image and the second predicted image are consistent in size. The embodiment of this disclosure does not limit a specific manner of the tri-linear interpolation.

In some embodiments, the step of determining the first reference image based on the second foreground prototype, the second background prototype, and the first image includes: acquiring a first feature map of the first image; and determining the first reference image based on the second foreground prototype, the second background prototype, and the first feature map.

In the embodiment of this disclosure, the first image is input into the first network model. The first feature map is extracted by the encoder of the first network model. Then, the similarity between the first feature map and the second foreground prototype is calculated or the similarity between the first feature map and the second background prototype is calculated based on the second foreground prototype, the second background prototype, and the first feature map to determine a similarity result. After that, normalization processing is performed on the similarity result by using a normalized exponential function (for example, a Softmax function) to determine the first reference image.

The above operation of determining the first reference image may also be referred to as an operation based on a non-parametric metric learning mechanism. The similarity between the first reference image and the labeled image set is measured through non-parametric metric learning, so as to segment the labeled image set.

In an exemplary embodiment, the first region is a foreground region, the another region is background region, a process of determining the first reference image based on the second foreground prototype, the second background prototype, and the first feature map includes: for each voxel in the first image, determining a voxel feature of the respective voxel based on the first feature map; calculating a third similarity between the voxel feature of the respective voxel and the second foreground prototype and a fourth similarity between the voxel feature of the respective voxel and the second background prototype; determining a third probability that the respective voxel belongs to the foreground region based on the third similarity; determining a fourth probability that the respective voxel belongs to the background region based on the fourth similarity; determining a segmentation result of the respective voxel based on the third probability and the fourth probability; and determining the first reference image based on the segmentation result of each voxel in the first image.

In some embodiments, the probability that the any voxel belongs to the foreground region is in a positive correlation relationship with the similarity between the voxel feature of the any voxel and the second foreground prototype. The probability that the any voxel belongs to the background region is in a positive correlation relationship with the similarity between the voxel feature of the any voxel and the second background prototype.

In the embodiment of this disclosure, the function used for calculating the similarity is recorded as a distance function $d(\cdot)$, the first feature map is recorded as $F_l$, and the spatial position of any voxel in the feature map in the first image is recorded as $(x, y, z)$. The foreground region of the second image is $p_{u(fg)}$, the second background prototype is $p_{u(bg)}$, and $P_u = \{p_{u(fg)}\} \cup \{p_{u(bg)}\}$ is satisfied. For each $P_{u(j \in (fg,bg))} \in P_u$, the first reference image is determined according to Formula (9) as follows.

$$P_{u2l(j)}^{(x,y,z)} = \frac{exp\left(-\alpha d\left(F_l^{(x,y,z)}, p_{u(j)}\right)\right)}{\Sigma_{p_{u(j)} \in P_u} exp\left(-\alpha d\left(F_l^{(x,y,z)}, p_{u(j)}\right)\right)} \qquad \text{Formula (9)}$$

Where, $P_{u2l(j)}^{(x,y,z)}$ is a segmentation result of a voxel with a spatial position of $(x, y, z)$ in the first reference image. In response to j being fg, the segmentation result refers to the probability that the voxel with the spatial position of $(x, y, z)$ in the first reference image belongs to the foreground region; in response to $j$ being bg, the segmentation result refers to the probability that the voxel with the spatial position of $(x, y, z)$ in the first reference image belongs to the background region; and exp is an exponential function, $d(\cdot)$ is a distance function, an opposite number of the distance calculated according to the distance function is taken as the similarity, $F_l^{(x,y,z)}$ is the voxel feature of the voxel with the spatial position of $(x, y, z)$ in the first feature map, $p_{u(j)}$ is the second foreground prototype or the second background prototype, $P_u$ includes the second foreground prototype and the second background prototype, $\Sigma$ is a symbol of a summation function, and $\alpha$ is a proportionality coefficient. The embodiment of this disclosure does not limit a specific value of the proportionality coefficient. In some embodiments, the proportionality coefficient is 20.

The first feature map needs to be subjected to upsampling processing through tri-linear interpolation. The embodiment of this disclosure does not limit a specific manner of the tri-linear interpolation. In addition, the embodiment of this disclosure does not limit a distance function. In some embodiments, the distance function is a function of cosine distance.

In the above manner, the first reference image can be determined, and after that, the loss value of the first network model is determined based on the first predicted image, the labeled image of the first image, the first reference image, the second predicted image, and the second reference image.

In some embodiments, the step of determining the loss value of the first network model based on the first predicted image, the labeled image, the first reference image, the second predicted image, and the second reference image includes: determining a first loss value based on the first predicted image and the labeled image; determining a second loss value based on the second predicted image and the second reference image; determining a third loss value based on the labeled image and the first reference image; and determining the loss value of the first network model based on the first loss value, the second loss value, and the third loss value.

In the embodiment of this disclosure, the first predicted image and the labeled image of the first image are input into a first loss function to determine the first loss value. The second predicted image and the second reference image are input into a second loss function to determine the second loss value. For related descriptions of the first loss value and the second loss value, refer to the descriptions related to the first loss value and the second loss value hereinabove. Details are not described herein. In the embodiment of this disclosure, the labeled image of the first image and the first reference image are input into a third loss function to determine the third loss value. The third loss function is also referred to as a backward prototype consistency loss function. The embodiment of this disclosure does not limit the third loss function. In some embodiments, the third loss function may be an MSE loss function, that is, an MSE between the first reference image and the labeled image of the first image is taken as the third loss value. In some embodiments, the third loss value may be a cross entropy loss function, that is, a cross entropy between the first reference image and the labeled image of the first image is taken as the third loss value.

In some embodiments, taking the third loss value being the cross entropy loss function as an example, the third loss value may be determined according to Formula (10) as follows.

$$L_{bpc} = L_{ce}(Q_l, P_{u2l}) \qquad \text{Formula (10)}$$

Where, $L_{bpc}$ is the third loss value, $L_{ce}$ is a function symbol of the MSE loss function, $Q_l$ is the first reference image, and $P_{u2l}$ is the first predicted image.

The loss value of the first network model is determined based on the first loss value, the second loss value,

and the third loss value after the first loss value, the second loss value, and the third loss value are determined. In some embodiments, the prototype consistency loss value is determined based on the second loss value and the third loss value; and the loss value of the first network model is determined based on the first loss value and the prototype consistency loss value.

In some embodiments, the loss value of the first network model may be determined according to Formula (11) as follows.

$$L = L_s + \lambda L_c, \text{ where, } L_c = L_{fpc} + \beta L_{bpc} \qquad \text{Formula (11)}$$

Where, $L$ is the loss value of the first network model, $L_s$ is the first loss value, $L_c$ is the prototype consistency loss value, $L_{fpc}$ is the second loss value, $L_{bpc}$ is the third loss value, $\lambda$ is a coefficient for balancing $L_s$ and $L_c$, and $\beta$ is a hyper-parameter for balancing $L_{fpc}$ and $L_{bpc}$. The embodiment of this disclosure does not limit the value of $\lambda$ and $\beta$.

In some embodiments, $\beta$ is 10, and $\lambda$ satisfies: $\lambda(t) = w_{max} \cdot e^{\left(-5\left(1-\frac{t}{t_{max}}\right)^2\right)}$. Where, $\lambda(t)$ (that is, $\lambda$) is a Gaussian function related to the number of times of training, $t$ is the number of times of training, $w_{max}$ is a final consistency weight, e is a natural constant, and $t_{max}$ is a target number of times of training. Such a $\lambda$ design may avoid being dominated by a highly unreliable consistency target at the beginning of training.

In the embodiment of this disclosure, in response to determining the loss value of the first network model, the first model parameter and the model parameter of the second network model may be acquired first, and then the loss value of the first network model is determined based on the first model parameter, the model parameter of the second network model, the first predicted image, the labeled image of the first image, the first reference image, the second predicted image, and the second reference image. The relationship between the model parameter of the second network model and the first model parameter has been described hereinabove. Details are not described herein again.

In some embodiments, the first loss value is determined based on the first model parameter, the first predicted image, and the labeled image of the first image in response to determining the first loss value. The second loss value is determined based on the first model parameter, the model parameter of the second network model, the second predicted image, and the second reference image in response to determining the second loss value. The third loss value is determined based on the first model parameter, the model parameter of the second network model, the labeled image of the first image, and the first reference image in response to determining the third loss value. After that, the loss value of the first network model is determined based on the first loss value, the second loss value, and the third loss value.

In some embodiments, the first model parameter is adjusted according to the loss value of the first network model to perform updating processing on the first network model once to determine an updated first network model. If the training end condition is satisfied, the updated first network model is taken as an image segmentation model. If the training end condition is not satisfied, the model parameter of the second network model may be determined based on the model parameter of the updated first network model to perform updating processing on the second network model once, so as to determine an updated second network model. The model parameter of the second network model may be determined according to the manner of Formula (1) above. After that, the updated first network model is taken as the first network model for next training, the updated second network model is taken as the second network model for next training, and steps from step 201 (or step 202) to step 205 are performed again until the image segmentation model is determined.

According to the above method, the second reference image is determined based on the second image and the labeled image of the first image. The second reference image is an image segmentation result determined by calculating the second image under the guidance of the labeled image of the first image, which can provide supervisory information for the second predicted image and propagate the image segmentation result determined by labeling to an unlabeled image, thereby reducing the quantity of images that need to be labeled, reducing time consumption and manpower consumption, and reducing the cost. After that, the image segmentation model is determined through the predicted image and the labeled image of the first image and the predicted image and the second reference image, which accelerates the training speed of the image segmentation model and improves the image segmentation efficiency.

The image segmentation model is determined by updating the first model parameter based on the loss value of the first network model. During determining the loss value of the first network model, the first model parameter, the model parameter of the second network model, the first reference image may also be additionally considered in addition to considering the predicted image and the labeled image of the first image, the second predicted image, and the reference image, and the information considered during determining the loss value of the first network model is enriched, which is beneficial to improving the reliability of the loss value of the first network model, thereby improving the effectiveness of updating the first model parameter based on the loss value of the first network model, and improving the training effect of the image segmentation model.

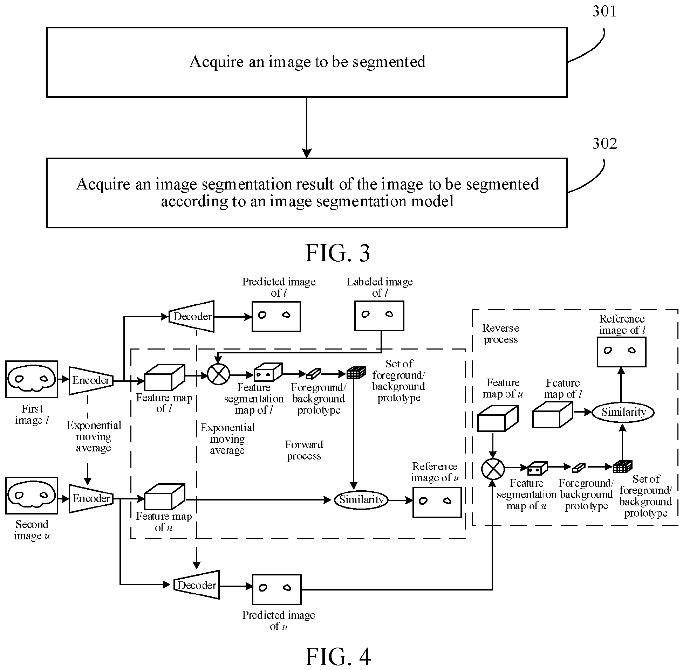

The embodiment of this disclosure provides an image segmentation method. The method may be applied to an implementation environment as shown in FIG. 1. Taking the flowchart of an image segmentation method provided by the embodiment of this disclosure shown in FIG. 3 as an example, the method may be performed by the electronic device 11 as shown in FIG. 1. As shown in FIG. 3, the method includes step 301 and step 302.

Step 301: Acquire an image to be segmented.

The embodiment of this disclosure does not limit the image to be segmented. In some embodiments, the image to be segmented is a medical image, a photographic image, and the like.

In some embodiments, the size of the image to be segmented is the same as that of the first image (or the second image) in the embodiment as shown in FIG. 2, so as to ensure the segmentation effect of the image segmentation model.

Step 302: Acquire an image segmentation result of the image to be segmented according to the image segmentation model.

The image segmentation model is determined based on the image segmentation model training method of the above embodiment.

In the embodiment of this disclosure, the image to be segmented is input into the image segmentation model, and the image segmentation model outputs an image segmentation result determined by predicting the image to be segmented.

In some embodiments, the step that the image segmentation result of the image to be segmented according to the image segmentation model includes: a feature map of the image to be segmented is acquired according to the image segmentation model, the feature map of the image to be segmented is used for characterizing semantic information of the image to be segmented; and the image segmentation result of the image to be segmented is determined based on the feature map of the image to be segmented.

In the embodiment of this disclosure, the image segmentation model includes an encoder and a decoder. The image to be segmented is input into the image segmentation model. A feature map of the image to be segmented is extracted by the encoder of the image segmentation model. The image segmentation result of the image to be segmented is determined by the decoder of the image segmentation model based on the feature map of the image to be segmented. The feature map of the image to be segmented includes a feature of each voxel in the image to be segmented. Therefore, the feature map of the image to be segmented can characterize semantic information of the image to be segmented.

The image to be segmented in the above method is determined through the predicted image and the labeled image of the first image and the predicted image and the second reference image. The second reference image is determined based on the second image and the labeled image of the first image, and is an image segmentation result determined by calculating the second image under the guidance of the labeled image of the first image, which can provide supervisory information for the second predicted image and propagate the image segmentation result determined by labeling to an unlabeled image, thereby reducing the quantity of images that need to be labeled, reducing time consumption and manpower consumption, and reducing the cost. The image segmentation model is determined based on the second reference image, which accelerates the training speed of the image segmentation model and improves the image segmentation efficiency.

The image segmentation model training method and the image segmentation method are set forth from the perspective of method steps above. The following will introduce the image segmentation model training method and the image segmentation method in detail from the perspective of a scenario. The scenario in the embodiment of this disclosure is a scenario in which a medical image (for example, a kidney image) is segmented, that is, the image segmentation model is trained by using a medical image in the embodiment of this disclosure, and the medical image is segmented by using an image segmentation model.

In the embodiment of this disclosure, computed tomography (CT) kidney images of 210 objects are collected. The CT kidney image of each object is subjected to the following preprocessing to determine a preprocessed kidney image. The CT kidney image is resampled to the resolution of 1 mm$^3$, the CT intensity is truncated to [75, 175] Heinz unit (HU), and then the CT intensity is normalized and a region of interest (ROI) is cropped to determine a 3D block region taking a kidney as a center, that is, to determine the preprocessed kidney image.

According to the embodiment of this disclosure, the preprocessed kidney images of the 210 objects are divided into three groups. One group is a sample image set used for training to determine an image segmentation model. The sample image set includes the preprocessed kidney images of 150 objects. Another group of images is a verification image set used for verifying a segmentation result of the image segmentation model. The verification image set includes the preprocessed kidney images of 10 objects. The remaining group of images is a test image set used for testing the segmentation result of the images segmentation model. The test image set includes the preprocessed kidney images of 50 objects. In some embodiments, according to the embodiment of this disclosure, the quantity of kidney images is expanded in a data augmentation manner. The data augmentation manner includes, but is not limited to, random cropping, flipping, and rotating.

The sample image set used for training to determine the image segmentation model includes a labeled image set and an unlabeled image set. The labeled image set is recorded as $S_L$, and the unlabeled image set is recorded as $S_U$. In the embodiment of this disclosure, the loss value of the first network model is adjusted according to Formula (12) as follows based on the labeled image set, the unlabeled image set, the parameter model of the first network model, and the model parameter of the second network model until the image segmentation model is determined.

$$min_\theta \mathcal{L}_s(\theta, S_L) + \lambda \mathcal{L}_c(\theta, \tilde{\theta}, S_L, S_U) \qquad \text{Formula (12)}$$

Where, $\mathcal{L}_s$ is the loss value determined based on the labeled image set, and $\mathcal{L}_c$ is the loss value determined based on the labeled image set and the unlabeled image set. $\theta$ is the first model parameter, $\tilde{\theta}$ is the model parameter of the second network model, and $\lambda$ is a Gaussian function related to the number of times of training.

In the embodiment of this disclosure, the labeled image set includes a first image and a labeled image of the first image. The unlabeled image set includes a second image. Both the first image and the second image are kidney images. Refer to FIG. 4, which is a schematic diagram of training of an image segmentation model provided by an embodiment of this disclosure.

The first image is recorded as *I*, and the first network model includes an encoder and a decoder. The first image is input into the encoder of the first network model. The first feature map is extracted by the encoder of the first network model. In an aspect, a first predicted image is determined by the decoder of the first network model according to the first feature map. In another aspect, cross multiplication processing is performed on the first feature map and the labeled image of the first image to determine a feature segmentation map of the first image. The feature segmentation map of the first image is a feature map in which a voxel feature of a foreground region of the first image and a voxel feature of a background region of the first image have been segmented. Then, the foreground/background prototype of the first image is determined based on the feature segmentation map of the first image, and a set of the foreground/background prototype of the first image is constructed.

The second image is recorded as *u*, the second network model includes an encoder and a decoder. The model parameter of the encoder of the second network model is determined according to the model parameter of the encoder of the first network model by using an exponential moving average method. The model parameter of the decoder of the second network model is determined according to the model parameter of the decoder of the first network model by using an exponential moving average method. The second image is input into the encoder of the second network model. The second feature map is extracted by the decoder of the second network model. In an aspect, a second predicted image is determined by the decoder of the second network model according to the second feature map. In another aspect, similarity calculation processing is performed according to the second feature map and the foreground/background prototype of the first image to determine a second reference image. The above process of determining the second reference image may be referred to as a forward process.

In some embodiments, cross multiplication processing is performed on the second predicted image and the second feature map to determine a feature segmentation map of the second image. The feature segmentation map of the second image is a feature map in which the voxel feature of the foreground region of the second image and the voxel feature of the background region of the second image have been segmented. Then, the foreground/background prototype of the second image is determined based on the feature segmentation map of the second image, and a set of the foreground/background prototype of the second image is constructed. After that, similarity calculation processing is performed according to the first feature map and the foreground/background prototype of the second image to determine a reference image of the first image. The above process of determining the first reference image may be referred to as an inverse (or backward) process.

After that, a loss value of the first network model is determined based on the first model parameter, the model parameter of the second network model, the first predicted image, the labeled image of the first image, the first reference image, the second predicted image, and the second reference image, so as to adjust the first model parameter according to the loss value of the first network model. The image segmentation model may be determined by adjusting the first model parameter for a plurality of times. The image segmentation model is the image segmentation model of the embodiment of this disclosure.

For the above implementation manner of training the first network model to determine the image segmentation model, see related descriptions from step 201 to step 205 for details. Implementation principles of the two manners are similar. Details are not described herein again.

In the embodiment of this disclosure, the first network model is also trained by using the labeled image set to determine another image segmentation model. The image segmentation model is a fully supervised image segmentation model. In response to the image segmentation model and the fully supervised image segmentation model of the embodiment of this disclosure being trained, the first network model is trained by using a graphics processing unit (GPU) and a stochastic gradient descent (SGD) optimizer. A weight decay=0.0001, and a momentum=0.9. The magnitude of a sample quantity (that is, batch) is set as 4, including two first images and two second images. The target number of times of training is 20000. The learning rate is initialized to 0.01, and decays to a power of 0.9 after each training. The image input into the first network model is a voxel with the size of $96\times96\times96$.

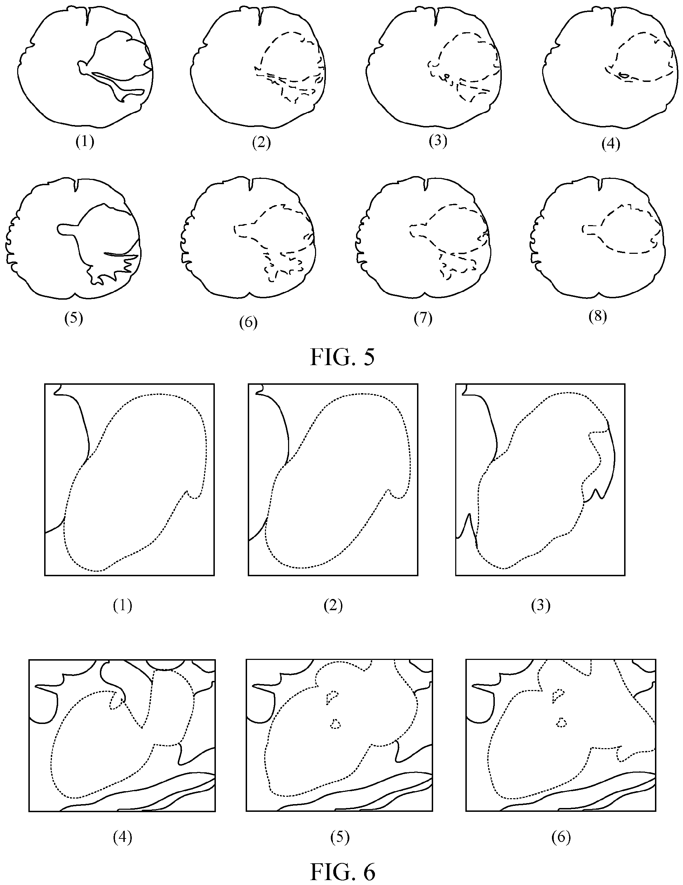

After the above two image segmentation models are determined, an image to be segmented is acquired, and the image to be segmented is input into each image segmentation model to determine an image segmentation result. The image to be segmented is a medical image. Referring to FIG. 5 and FIG. 6, FIG. 5 is a schematic diagram of an image segmentation result of a brain tumor image provided by an embodiment of this disclosure, and FIG. 6 is a schematic diagram of an image segmentation result of a kidney image provided by an embodiment of this disclosure.

(1) in FIG. 5 is one brain tumor image, (2) in FIG. 5 is a labeled image of this brain tumor image (dotted lines represent a labeling result), (3) in FIG. 5 is an image segmentation result, determined by using an image segmentation model of the embodiment of this disclosure, of this brain tumor image (dotted lines represent an image segmentation result), and (4) in FIG. 5 is an image segmentation result, determined by using a fully supervised image segmentation model, of this brain tumor image (dotted lines represent an image segmentation result). (5) in FIG. 5 is another brain tumor image, (6) in FIG. 5 is a labeled image of this brain tumor image (dotted lines represent a labeling result), (7) in FIG. 5 is an image segmentation result, determined by using an image segmentation model of the embodiment of this disclosure, of this brain tumor image (dotted lines represent an image segmentation result), and (8) in FIG. 5 is an image segmentation result, determined by using a fully supervised image segmentation model, of this brain tumor image (dotted lines represent an image segmentation result). It may be known from FIG. 5 that the image segmentation result of the brain tumor image determined by using the image segmentation model of the embodiment of this disclosure is closer to the labeled image of the brain tumor image than the image segmentation result of the brain tumor image determined by using the fully supervised image segmentation model, that is, the image segmentation model of the embodiment of this disclosure has a better brain tumor image segmentation result than the fully supervised image segmentation model.

(1) in FIG. 6 is a labeled image of one kidney image (dotted lines represent a labeling result), (2) in FIG. 6 is an image segmentation result, determined by using an image segmentation model of the embodiment of this disclosure, of this kidney image (dotted lines represent an image segmentation result), and (3) in FIG. 6 is an image segmentation result, determined by using a fully supervised image segmentation model, of this kidney image (dotted lines represent an image segmentation result). (4) in FIG. 6 is labeled image of another kidney image (dotted lines represent a labeling result), (5) in FIG. 6 is an image segmentation result, determined by using an image segmentation model of the embodiment of this disclosure, of this kidney image (dotted lines represent an image segmentation result), and (6) in FIG. 6 is an image segmentation result, determined by using a fully supervised image segmentation model, of this brain tumor image (dotted lines represent the image segmentation result). It may be known from FIG. 6 that the image segmentation result of the kidney image determined by using the image segmentation model of the embodiment of this disclosure is closer to the labeled image of the kidney image than the image segmentation result of the kidney image determined by using the fully supervised image segmentation model, that is, the image segmentation model of the embodiment of this disclosure has a better kidney image segmentation result than the fully supervised image segmentation model.

In order to compare the image segmentation effects of different models, in the embodiment of this disclosure, three sample images sets are used for training seven network models to determine a plurality of image segmentation models. The proportions of the labeled images in these three sample image sets are 5%, 10%, and 20% respectively. Each sample image set may be trained to determine seven image segmentation models. These seven image segmentation models are the fully supervised image segmentation model, a mean-teacher self-integration (MT) image segmentation model, uncertainty perceived mean-teacher self-integration (UA-MT) image segmentation model, an entropy mini method image segmentation model, a deep adversarial network (DAN) image segmentation model, an interpolation consistency training (ICT) image segmentation model, and the image segmentation model of the embodiment of this disclosure.

According to the embodiment of this disclosure, a sliding window with a voxel step length of $64\times64\times64$ is used in a testing stage. The above seven image segmentation models are comprehensively evaluated by using four indicators. These four indicators are Dice coefficient (an indicator used for measuring similarity), Jaccard coefficient, 95% Hausdorff distance (95 HD), and average surface distance (ASD) respectively, and a comprehensive evaluation result is as shown in Table 1 as follows.

Table 1

| Types of image segmentation models | Data partitioning proportion | | Indicator | | | |
|---|---|---|---|---|---|---|
| | Labeled | Unlabeled | Dice (%) | Jaccard (%) | 95 HD (mm) | ASD (mm) |
| Fully supervised | 5% | 0% | 89.64 | 82.40 | 10.64 | 0.79 |

(continued)

| Types of image segmentation models | Data partitioning proportion | | Indicator | | | |
|---|---|---|---|---|---|---|
| | Labeled | Unlabeled | Dice (%) | Jaccard (%) | 95 HD (mm) | ASD (mm) |
| MT | 5% | 95% | 92.92 | 87.78 | 6.13 | 0.64 |
| UA-MT | 5% | 95% | 92.88 | 87.63 | 6.57 | 0.62 |
| Entropy Mini | 5% | 95% | 93.15 | 88.13 | 5.98 | 0.61 |
| DAN | 5% | 95% | 93.01 | 87.86 | 6.39 | 0.61 |
| ICT | 5% | 95% | 92.47 | 86.97 | 7.20 | 0.73 |
| The embodiment of this disclosure | 5% | 95% | 93.43 | 88.67 | 5.33 | 0.59 |
| Fully supervised | 10% | 0% | 92.31 | 86.72 | 6.84 | 0.67 |
| MT | 10% | 90% | 93.98 | 89.81 | 4.63 | 0.56 |
| UA-MT | 10% | 90% | 94.12 | 90.02 | 4.52 | 0.56 |
| Entropy Mini | 10% | 90% | 94.05 | 90.36 | 4.34 | 0.55 |
| DAN | 10% | 90% | 93.94 | 89.65 | 4.79 | 0.59 |
| ICT | 10% | 90% | 94.02 | 89.58 | 4.40 | 0.61 |
| The embodiment of this disclosure | 10% | 90% | 94.59 | 90.69 | 4.15 | 0.54 |
| Fully supervised | 20% | 0% | 94.85 | 90.87 | 4.06 | 0.54 |
| MT | 20% | 80% | 95.51 | 92.04 | 3.12 | 0.52 |
| UA-MT | 20% | 80% | 95.41 | 91.79 | 3.21 | 0.55 |
| Entropy Mini | 20% | 80% | 95.16 | 91.55 | 3.12 | 0.51 |
| DAN | 20% | 80% | 95.61 | 92.06 | 3.15 | 0.51 |
| ICT | 20% | 80% | 94.77 | 90.68 | 4.33 | 0.60 |
| The embodiment of this disclosure | 20% | 80% | 95.86 | 92.56 | 2.88 | 0.50 |

It can be known from Table 1 that both the Dice coefficient and the Jaccard coefficient of the image segmentation model of the embodiment of this disclosure are both great, while both the 95 HD and the ASD are small. The segmentation effect of the image segmentation model is directly proportional to the Dice coefficient and is also directly proportional to the Jaccard coefficient, but is inversely proportional to the 95 HD and is also inversely proportional to the ASD. Therefore, it can be obviously determined from Table 1 that the segmentation effect of the image segmentation model of the embodiment of this disclosure is superior to that of the other six image segmentation models.

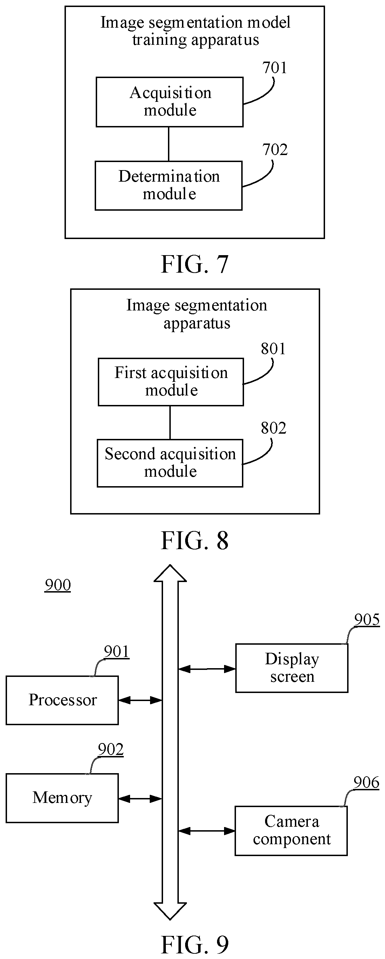

FIG. 7 is a schematic structural diagram of an image segmentation model training apparatus provided by an embodiment of this disclosure. As shown in FIG. 7, the apparatus may include:

an acquisition module 701, configured to acquire a first image, a second image, and a labeled image of the first image, the labeled image comprising an initial image segmentation result determined by labeling an object contained in the first image and segmenting the first image according to the labeled object, the second image being an unlabeled image containing the object;

the acquisition module 701 being further configured to input the first image into a first network model to obtain a first predicted image, the first predicted image comprising a first image segmentation result determined by predicting a first region within the first image where the object is located and segmenting the first image according to the predicted first region;

the acquisition module 701 being further configured to input the second image into a second network model to obtain a second predicted image, the second predicted image comprising a second image segmentation result determined by predicting a second region within the second image where the object is located and segmenting the second image according to the predicted second region; and

a determination module 702, configured to determine a second reference image of the second image based on the second image and the labeled image, the second reference image comprising a third image segmentation result determined by measuring similarity between the second image and the labeled image and segmenting the second image according to the measured similarity;

EP 4 358 033 A1

the determination module 702 being further configured to adjust a first model parameter of the first network model based on the first predicted image, the labeled image, the second predicted image, and the second reference image, in order to update the first network model.

In some embodiments, the determination module 702 is configured to determine a first foreground prototype of the first image and a first background prototype of the first image based on the labeled image, the first foreground prototype being a reference feature of the first region in the first image, and the first background prototype being a reference feature of another region except the first region in the first image; and determine the second reference image based on the first foreground prototype, the first background prototype, and the second image.

In some embodiments, the determination module 702 is configured to acquire a first feature map of the first image, the first feature map being used for characterizing semantic information of the first image; and determine the first foreground prototype and the first background prototype based on the first feature map and the labeled image.

In some embodiments, the determination module 702 is configured to determine, in the first feature map, voxel features of first voxels with spatial positions located in the first region and voxel features of second voxels with spatial positions located in the another region except the first region in the first image based on the labeled image; take an average value of the voxel features of the first voxels as the first foreground prototype; and take an average value of the voxel features of the second voxels as the first background prototype.

In some embodiments, the determination module 702 is configured to acquire a second feature map of the second image, the second feature map being used for characterizing semantic information of the second image; and determine the second reference image based on the first foreground prototype, the first background prototype, and the second feature map.

In some embodiments, the determination module 702 is configured to for each voxel in the second image, determine a voxel feature of the respective voxel based on the second feature map; calculate a first similarity between the voxel feature of the respective voxel and the first foreground prototype and a second similarity between the voxel feature of the respective voxel and the first background prototype; determine a first probability that the respective voxel belongs to the foreground region based on the first similarity; determine a second probability that the respective voxel belongs to the background region based on the second similarity; determine a segmentation result of the respective voxel based on the first probability and the second probability; and determine the second reference image based on the segmentation result of each voxel in the second image.

In some embodiments, the determination module 702 is configured to determine a loss value of the first network model based on the first predicted image, the labeled image, the second predicted image, and the second reference image; and update the first model parameter based on the loss value of the first network model.

In some embodiments, the determination module 702 is configured to determine a first loss value based on the first predicted image and the labeled image; determine a second loss value based on the second predicted image and the second reference image; and determine the loss value of the first network model based on the first loss value and the second loss value.

In some embodiments, the determination module 702 is configured to determine the loss value of the first network model based on the first model parameter, a second model parameter of the second network model, the first predicted image, the labeled image, the second predicted image, and the second reference image.

In some embodiments, the model parameter of the second network model is determined based on the first model parameter.

In some embodiments, the determination module 702 is further configured to determine a first weight of a third model parameter of a third network model and a second weight of the first model parameter; and summing on the third model parameter and the first model parameter using the first weight and the second weight to determine the second model parameter.

In some embodiments, the determination module 702 is further configured to determine a first reference image of the first image based on the first image and the second predicted image; and
the determination module 702 is further configured to determine the loss value of the first network model based on the first predicted image, the labeled image, the first reference image, the second predicted image, and the second reference image.

In some embodiments, the determination module 702 is configured to determine a second foreground prototype of the second image and a second background prototype of the second image based on the second predicted image, the second foreground prototype being a reference feature of the second region in the second image, and the second background prototype being a reference feature of another region except the second region in the second image; and determine the first reference image based on the second foreground prototype, the second background prototype, and the first image.

In some embodiments, the determining module 702 is configured to acquire a second feature map of the second image; and determine the second foreground prototype and the second background prototype based on the second feature map and the second predicted image.

In some embodiments, the determination module 702 is configured to determine, in the second feature map, voxel features of third voxels with spatial positions located in the second region and voxel features of fourth voxels with spatial positions located in the another region except the second region in the second image based on the second predicted image; and take an average value of the voxel features of the third voxels as the second foreground prototype; and take an average value of the voxel features of the fourth voxels as the second background prototype.

In some embodiments, the determining module 702 is configured to acquire a first feature map of the first image; and determine the first reference image based on the second foreground prototype, the second background prototype, and the first feature map.

In some embodiments, the determination module 702 is configured to for each voxel in the first image, determine a voxel feature of the respective voxel based on the first feature map; calculate a third similarity between the voxel feature of the respective voxel and the second foreground prototype and a fourth similarity between the voxel feature of the respective voxel and the second background prototype; determine a third probability that the respective voxel belongs to the foreground region based on the third similarity; determine a fourth probability that the respective voxel belongs to the background region based on the fourth similarity; determine a segmentation result of the respective voxel based on the third probability and the fourth probability; and determine the first reference image based on the segmentation result of each voxel in the first image.

In some embodiments, the determination module 702 is configured to determine a first loss value based on the first predicted image and the labeled image; determine a second loss value based on the second predicted image and the second reference image; determine a third loss value based on the labeled image and the first reference image; and determine the loss value of the first network model based on the first loss value, the second loss value, and the third loss value.

According to the above apparatus, the second reference image is determined based on the second image and the labeled image of the first image. The second reference image is an image segmentation result determined by calculating the second image under the guidance of the labeled image of the first image, which can provide supervisory information for the second predicted image and propagate the image segmentation result determined by labeling to an unlabeled image, thereby reducing the quantity of images that need to be labeled, reducing time consumption and manpower consumption, and reducing the cost. After that, the image segmentation model is determined through the predicted image and the labeled image of the first image and the predicted image and the second reference image, which accelerates the training speed of the image segmentation model and improves the image segmentation efficiency.

The image segmentation model is determined by updating the first model parameter based on the loss value of the first network model. During determining the loss value of the first network model, the first model parameter, the model parameter of the second network model, the first reference image may also be additionally considered in addition to considering the predicted image and the labeled image of the first image, the second predicted image, and the reference image, and the information considered during determining the loss value of the first network model is enriched, which is beneficial to improving the reliability of the loss value of the first network model, thereby improving the effectiveness of updating the first model parameter based on the loss value of the first network model, and improving the training effect of the image segmentation model.

It is to be understood that when the apparatus provided in FIG. 7 above implements the functions thereof, only division of the above functional modules is used as an example for description. In a practical application, the functions need be allocated to be completed by different functional modules according to requirements. That is, an internal structure of the device is divided into different functional modules to complete all or part of the functions described above. In addition, the apparatus provided in the above embodiments and the method embodiments fall within the same concept. For details of a specific implementation process, refer to the method embodiments. Details are not described herein again.

FIG. 8 is a schematic structural diagram of an image segmentation apparatus provided by an embodiment of this disclosure. As shown in FIG. 8, the apparatus may include:

a first acquisition module 801, configured to acquire an image to be segmented; and

a second acquisition module 802, configured to acquire an image segmentation result of the image to be segmented according to an image segmentation model, the image segmentation model being determined based on any one of the above image segmentation model training methods.

In some embodiments, the second acquisition module 802 is configured to acquire a feature map of the image to be segmented according to the image segmentation model, the feature map of the image to be segmented being used for characterizing semantic information of the image to be segmented, and determine the image segmentation result of the image to be segmented based on the feature map of the image to be segmented.

The image to be segmented in the above apparatus is determined through the predicted image and the labeled image of the first image and the predicted image and the second reference image. The second reference image is determined based on the second image and the labeled image of the first image, and is an image segmentation result determined by calculating the second image under the guidance of the labeled image of the first image, which can provide supervisory information for the second predicted image and propagate the image segmentation result determined by labeling to an unlabeled image, thereby reducing the quantity of images that need to be labeled, reducing time consumption and manpower consumption, and reducing the cost. The image segmentation model is determined based on the second reference image, which accelerates the training speed of the image segmentation model and improves the image segmentation efficiency.

It is to be understood that when the apparatus provided in FIG. 8 above implements the functions thereof, only division of the above functional modules is used as an example for description. In a practical application, the functions need be allocated to be completed by different functional modules according to requirements. That is, an internal structure of the device is divided into different functional modules to complete all or part of the functions described above. In addition, the apparatus provided in the above embodiments and the method embodiments fall within the same concept. For details of a specific implementation process, refer to the method embodiments. Details are not described herein again.

FIG. 9 shows a structural block diagram of a terminal device 900 provided by an exemplary embodiment of this disclosure. The terminal device 900 may be a portable mobile terminal, for example: a smartphone, a tablet computer, an MP3 player, an MP4 player, a notebook computer, or a desktop computer. The terminal device 900 may also be referred to as other names such as user equipment, a portable terminal, a laptop terminal, or a desktop terminal.

The terminal device 900 includes: a processor 901 and a memory 902.

The processor 901 may include one or more processing cores, for example, a 4-core processor or an 8-core processor. The processor 901 may be implemented in at least one hardware form of a digital signal processor (DSP), a field-programmable gate array (FPGA), and a programmable logic array (PLA). The processor 901 may also include a main processor and a coprocessor. The main processor is a processor configured to process data in wake-up state, and is also referred to as a central processing unit (CPU). The coprocessor is a low power consumption processor configured to process the data in a standby state. In some embodiments, the processor 901 may be integrated with a graphics processing unit (GPU). The GPU is configured to render and draw content that needs to be displayed on a display screen. In some embodiments, the processor 901 may further include an artificial intelligence (AI) processor. The AI processor is configured to process computing operations related to machine learning.

The memory 902 may include one or more computer-readable storage media. The computer-readable storage medium may be non-transient. The memory 902 may further include a high-speed random access memory and a nonvolatile memory, for example, one or more disk storage devices or flash storage devices. In some embodiments, the non-transitory computer-readable storage medium in the memory 902 is configured to store at least one instruction, and the at least one instruction is configured to be executed by the processor 901 to implement the image segmentation model training method or the image segmentation method provided by the embodiments of this disclosure.

In some embodiments, the terminal device 900 may optionally include: at least one peripheral device. Specifically, the peripheral device includes: at least one of a display screen 905 and a camera component 906.

The display screen 905 is configured to display a user interface (UI). The UI may include a graph, text, an icon, a video, and any combination thereof. When the display screen 905 is a touch display screen, the display screen 905 further has a capability of collecting a touch signal on or above a surface of the display screen 905. The touch signal may be inputted to the processor 901 as a control signal for processing. In this case, the display screen 905 may further be configured to provide a virtual button and/or a virtual keyboard that are/is also referred to as a soft button and/or a soft keyboard. In some embodiments, the image segmentation result may be displayed through the display screen 905 after the image segmentation result of the image to be segmented is acquired.

The camera component 906 is configured to collect images or videos. In some embodiments, the camera component 906 includes a front camera and a rear camera. In all embodiments of the present disclosure, the front camera is disposed on a front panel of a terminal, and the rear camera is disposed on a back surface of the terminal. In some embodiments, there are at least two rear cameras, which are respectively any of a main camera, a depth-of-field camera, a wide-angle camera, and a telephoto camera to realize a bokeh function through fusion of the main camera and the depth-of-field camera, panoramic photographing and virtual reality (VR) photographing functions through fusion of the main camera and the wide-angle camera, or other fusion photographing functions. In some embodiments, the image to be segmented may be collected through the camera component 906.

A person skilled in the art may understand that the structure shown in FIG. 9 does not constitute a limitation to the terminal device 900, which may include more or fewer components than those shown in the figure, or combine some components, or use different component deployments.

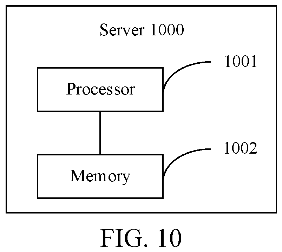

FIG. 10 is a schematic structural diagram of a server provided by an embodiment of this disclosure. The server 1000 may vary a lot due to different configurations or performance, and may include one or more processors 1001 or one or more memories 1002. The one or more memories 1002 store at least one computer program. The at least one computer program is loaded and executed by the one or more processors 1001 to implement the image segmentation model training method or image segmentation method provided by various method embodiments. In some embodiments, the processor 1001 is a CPU. Certainly, the server 1000 may also have components such as a wired or wireless network interface, a keyboard, and an input/output (I/O) interface, so as to facilitate input and output. The server 1000 may further include other components configured to implement functions of a device. Details are not further described herein.

In an exemplary embodiment, a non-transitory computer-readable storage medium is further provided. The non-transitory computer-readable storage medium stores at least one computer program. The at least one computer program is loaded and executed by a processor to enable an electronic device to implement any one of the above image segmentation model training methods or image segmentation methods.

In some embodiments, the above computer-readable storage medium may be a read-only memory (ROM), a random access memory (RAM), a compact disc ROM (CD-ROM), a magnetic tape, a floppy disk, an optical data storage device, or the like.

In an exemplary embodiment, a computer program or a computer program product is further provided. The computer program or the computer program product stores at least one computer instruction. The at least one computer instruction is loaded and executed by a processor to enable a computer to implement any one of the above image segmentation model training methods or image segmentation methods.

It is to be understood that "a plurality of" mentioned in the specification refers to two or more. "And/or" describes an association relationship for describing associated objects and represents that three relationships may exist. For example, A and/or B may represent the following three cases: only A exists, both A and B exist, and only B exists. The character "/" generally indicates an "or" relationship between the associated objects before and after.

The foregoing descriptions are merely exemplary embodiments of this disclosure, but are not intended to limit this disclosure. Any modification, equivalent replacement, or improvement made within the principle of this disclosure shall fall within the protection scope of this disclosure.

**Claims**

1. An image segmentation model training method, executable by an electronic device, comprising:

   acquiring a first image, a second image, and a labeled image of the first image, the labeled image comprising an initial image segmentation result determined by labeling an object contained in the first image and segmenting the first image according to the labeled object, the second image being an unlabeled image containing the object;
   inputting the first image into a first network model to obtain a first predicted image, the first predicted image comprising a first image segmentation result determined by predicting a first region within the first image where the object is located and segmenting the first image according to the predicted first region;
   inputting the second image into a second network model to obtain a second predicted image, the second predicted image comprising a second image segmentation result determined by predicting a second region within the second image where the object is located and segmenting the second image according to the predicted second region;
   determining a second reference image of the second image based on the second image and the labeled image, the second reference image comprising a third image segmentation result determined by measuring similarity between the second image and the labeled image and segmenting the second image according to the measured similarity; and
   adjusting a first model parameter of the first network model based on the first predicted image, the labeled image, the second predicted image, and the second reference image, in order to update the first network model.

2. The method according to claim 1, wherein the determining a second reference image of the second image based on the second image and the labeled image comprises:

   determining a first foreground prototype of the first image and a first background prototype of the first image based on the labeled image, the first foreground prototype being a reference feature of the first region in the first image, and the first background prototype being a reference feature of another region except the first region in the first image; and
   determining the second reference image based on the first foreground prototype, the first background prototype, and the second image.

3. The method according to claim 2, wherein the determining a first foreground prototype of the first image and a first background prototype of the first image based on the labeled image comprises:

acquiring a first feature map of the first image, the first feature map being used for characterizing semantic information of the first image; and

determining the first foreground prototype and the first background prototype based on the first feature map and the labeled image.

4.  The method according to claim 3, wherein the determining the first foreground prototype and the first background prototype based on the first feature map and the labeled image comprises:

    determining, in the first feature map, voxel features of first voxels with spatial positions located in the first region and voxel features of second voxels with spatial positions located in the another region except the first region in the first image based on the labeled image;

    taking an average value of the voxel features of the first voxels as the first foreground prototype; and taking an average value of the voxel features of the second voxels as the first background prototype.

5.  The method according to claim 2, wherein the determining the second reference image based on the first foreground prototype, the first background prototype, and the second image comprises:

    acquiring a second feature map of the second image, the second feature map being used for characterizing semantic information of the second image; and

    determining the second reference image based on the first foreground prototype, the first background prototype, and the second feature map.

6.  The method according to claim 5, wherein the first region is a foreground region, the another region is background region, the determining the second reference image based on the first foreground prototype, the first background prototype, and the second feature map comprises:

    for each voxel in the second image,

    determining a voxel feature of the respective voxel based on the second feature map; calculating a first similarity between the voxel feature of the respective voxel and the first foreground prototype and a second similarity between the voxel feature of the respective voxel and the first background prototype;

    determining a first probability that the respective voxel belongs to the foreground region based on the first similarity; determining a second probability that the respective voxel belongs to the background region based on the second similarity;

    determining a segmentation result of the respective voxel based on the first probability and the second probability; and

    determining the second reference image based on the segmentation result of each voxel in the second image.

7.  The method according to any one of claims 1 to 6, wherein the adjusting a first model parameter of the first network model based on the first predicted image, the labeled image, the second predicted image, and the second reference image comprises:

    determining a loss value of the first network model based on the first predicted image, the labeled image, the second predicted image, and the second reference image; and

    updating the first model parameter based on the loss value of the first network model.

8.  The method according to claim 7, wherein the determining a loss value of the first network model based on the first predicted image, the labeled image, the second predicted image, and the second reference image comprises:

    determining a first loss value based on the first predicted image and the labeled image;

    determining a second loss value based on the second predicted image and the second reference image; and

    determining the loss value of the first network model based on the first loss value and the second loss value.

9.  The method according to claim 7, wherein the determining a loss value of the first network model based on the first predicted image, the labeled image, the second predicted image, and the second reference image comprises:

    determining the loss value of the first network model based on the first model parameter, a second model parameter of the second network model, the first predicted image, the labeled image, the second predicted image, and the second reference image.

10. The method according to claim 9, wherein the second model parameter is determined based on the first model parameter.

11. The method according to claim 10, further comprising:

determining a first weight of a third model parameter of a third network model and a second weight of the first model parameter; and
summing on the third model parameter and the first model parameter using the first weight and the second weight to determine the second model parameter.

12. The method according to claim 7, wherein after inputting the second image into a second network model to obtain a second predicted image, the method further comprises:

determining a first reference image of the first image based on the first image and the second predicted image; and
the determining a loss value of the first network model based on the first predicted image, the labeled image, the second predicted image, and the second reference image comprises:
determining the loss value of the first network model based on the first predicted image, the labeled image, the first reference image, the second predicted image, and the second reference image.

13. The method according to claim 12, wherein the determining a reference image of the first image based on the first image and the second predicted image comprises:

determining a second foreground prototype of the second image and a second background prototype of the second image based on the second predicted image, the second foreground prototype being a reference feature of the second region in the second image, and the second background prototype being a reference feature of another region except the second region in the second image; and
determining the first reference image based on the second foreground prototype, the second background prototype, and the first image.

14. The method according to claim 13, wherein the determining a second foreground prototype of the second image and a second background prototype of the second image based on the second predicted image comprises:

acquiring a second feature map of the second image; and
determining the second foreground prototype and the second background prototype based on the second feature map and the second predicted image.

15. The method according to claim 14, wherein the determining the second foreground prototype and the second background prototype based on the second feature map and the second predicted image comprises:

determining, in the second feature map, voxel features of third voxels with spatial positions located in the second region and voxel features of fourth voxels with spatial positions located in the another region except the second region in the second image based on the second predicted image; and
taking an average value of the voxel features of the third voxels as the second foreground prototype; and taking an average value of the voxel features of the fourth voxels as the second background prototype.

16. The method according to claim 13, wherein the determining the first reference image based on the second foreground prototype, the second background prototype, and the first image comprises:

acquiring a first feature map of the first image; and
determining the first reference image based on the second foreground prototype, the second background prototype, and the first feature map.

17. The method according to claim 16, wherein the first region is a foreground region, the another region is background region, the determining the first reference image based on the second foreground prototype, the second background prototype, and the first feature map comprises:

for each voxel in the first image,

determining a voxel feature of the respective voxel based on the first feature map; calculating a third similarity between the voxel feature of the respective voxel and the second foreground prototype and a fourth similarity between the voxel feature of the respective voxel and the second background prototype;
determining a third probability that the respective voxel belongs to the foreground region based on the third similarity;
determining a fourth probability that the respective voxel belongs to the background region based on the fourth similarity;
determining a segmentation result of the respective voxel based on the third probability and the fourth probability; and

determining the first reference image based on the segmentation result of each voxel in the first image.

18. The method according to claim 12, wherein the determining the loss value of the first network model based on the first predicted image, the labeled image, the first reference image, the second predicted image, and the second reference image comprises:

determining a first loss value based on the first predicted image and the labeled image;
determining a second loss value based on the second predicted image and the second reference image;
determining a third loss value based on the labeled image and the first reference image; and
determining the loss value of the first network model based on the first loss value, the second loss value, and the third loss value.

19. An image segmentation method, executable by an electronic device, comprising:

acquiring an image to be segmented; and
acquiring an image segmentation result of the image to be segmented according to an image segmentation model, the image segmentation model being determined based on the method according to any one of claims 1 to 18.

20. The method according to claim 19, wherein the acquiring an image segmentation result of the image to be segmented according to an image segmentation model comprises:

acquiring a feature map of the image to be segmented according to the image segmentation model, the feature map of the image to be segmented being used for characterizing semantic information of the image to be segmented; and
determining the image segmentation result of the image to be segmented based on the feature map of the image to be segmented.

21. An image segmentation model training apparatus, comprising:

an acquisition module, configured to acquire a first image, a second image, and a labeled image of the first image, the labeled image comprising an initial image segmentation result determined by labeling an object contained in the first image and segmenting the first image according to the labeled object, the second image being an unlabeled image containing the object;
the acquisition module being further configured to input the first image into a first network model to obtain a first predicted image, the first predicted image comprising a first image segmentation result determined by predicting a first region within the first image where the object is located and segmenting the first image according to the predicted first region;
the acquisition module being further configured to input the second image into a second network model to obtain a second predicted image, the second predicted image comprising a second image segmentation result determined by predicting a second region within the second image where the object is located and segmenting the second image according to the predicted second region; and
a determination module, configured to determine a second reference image of the second image based on the second image and the labeled image, the second reference image comprising a third image segmentation result determined by measuring similarity between the second image and the labeled image and segmenting the second image according to the measured similarity;

the determination module being further configured to adjust a first model parameter of the first network model based on the first predicted image, the labeled image, the second predicted image, and the second reference image, in order to update the first network model.

22. An image recognition apparatus, comprising:

a first acquisition module, configured to determine an image to be segmented; and
a second acquisition module, configured to acquire an image segmentation result of the image to be segmented according to an image segmentation model, the image segmentation model being determined based on the method according to any one of claims 1 to 18.

23. An electronic device, comprising a processor and a memory, the memory storing at least one computer program, the at least one computer program being loaded and executed by the processor to enable the electronic device to implement the image segmentation model training method according to any one of claims 1 to 18 and the image segmentation method according to any one of claims 19 to 20.

24. A non-volatile computer-readable storage medium, storing at least one computer program, and the at least one computer program being loaded and executed by a processor to enable a computer to implement the image segmentation model training method according to any one of claims 1 to 18 and the image segmentation method according to any one of claims 19 to 20.

25. A computer program product, storing at least one computer instruction, and the at least one computer instruction being loaded and executed by a processor to enable the computer to implement the image segmentation model training method according to any one of claims 1 to 18 and the image segmentation method according to any one of claims 19 to 20.

FIG. 1

Acquire a first image, a second image, and a labeled image of the first image. The labeled image includes an initial image segmentation result determined by labeling an object contained in the first image and segmenting the first image according to the labeled object, and the second image is an unlabeled image containing the object

201

Input the first image into a first network model to obtain a first predicted image. The first predicted image includes a first image segmentation result determined by predicting a first region within the first image where the object is located and segmenting the first image according to the predicted first region

202

Input the second image into a second network model to obtain a second predicted image. The second predicted image includes a second image segmentation result determined by predicting a second region within the second image where the object is located and segmenting the second image according to the predicted second region

203

Determine a second reference image of the second image based on the second image and the labeled image. The second reference image includes a third image segmentation result determined by measuring similarity between the second image and the labeled image and segmenting the second image according to the measured similarity

204

Adjust a first model parameter of the first network model based on the first predicted image, the labeled image, the second predicted image, and the second reference image, in order to update the first network model

205

FIG. 2

FIG. 3

FIG. 4

(1)        (2)        (3)        (4)

(5)        (6)        (7)        (8)

FIG. 5

(1)        (2)        (3)

(4)        (5)        (6)

FIG. 6

Image segmentation model
training apparatus

Acquisition
module — 701

Determination
module — 702

FIG. 7

Image segmentation
apparatus

First acquisition
module — 801

Second acquisition
module — 802

FIG. 8

900

901 Processor

902 Memory

905 Display
screen

906 Camera
component

FIG. 9

FIG. 10

## INTERNATIONAL SEARCH REPORT

| | International application No. |
|---|---|
| | **PCT/CN2022/121320** |

**A. CLASSIFICATION OF SUBJECT MATTER**

G06V 10/774(2022.01)i

According to International Patent Classification (IPC) or to both national classification and IPC

**B. FIELDS SEARCHED**

Minimum documentation searched (classification system followed by classification symbols)

G06V,G06K

Documentation searched other than minimum documentation to the extent that such documents are included in the fields searched

Electronic data base consulted during the international search (name of data base and, where practicable, search terms used)

CNPAT, WPI, EPODOC, CNKI: 图像, 分割, 模型, 标注, 预测, 前景, 背景, image, segment+, model, annotation, predict+, foreground, background

**C. DOCUMENTS CONSIDERED TO BE RELEVANT**

| Category* | Citation of document, with indication, where appropriate, of the relevant passages | Relevant to claim No. |
|---|---|---|
| PX | CN 114332554 A (TENCENT TECHNOLOGY SHENZHEN CO., LTD.) 12 April 2022 (2022-04-12) claims 1-20, and description, paragraphs 82-134 | 1-25 |
| A | CN 113112509 A (SHENZHEN SMARTMORE INFORMATION TECHNOLOGY CO., LTD. et al.) 13 July 2021 (2021-07-13) claims 1-10 | 1-25 |
| A | CN 112966687 A (UBTECH ROBOTICS CORP.) 15 June 2021 (2021-06-15) entire document | 1-25 |
| A | CN 113538441 A (TENCENT TECHNOLOGY SHENZHEN CO., LTD.) 22 October 2021 (2021-10-22) entire document | 1-25 |
| A | CN 113591566 A (BEIJING BAIDU NETCOM SCIENCE AND TECHNOLOGY CO., LTD.) 02 November 2021 (2021-11-02) entire document | 1-25 |
| A | WO 2020192471 A1 (TENCENT TECHNOLOGY SHENZHEN COMPANY LIMITED) 01 October 2020 (2020-10-01) entire document | 1-25 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/121320**

| Patent document cited in search report | | | Publication date (day/month/year) | Patent family member(s) | | | Publication date (day/month/year) |
|---|---|---|---|---|---|---|---|
| CN | 114332554 | A | 12 April 2022 | None | | | |
| CN | 113112509 | A | 13 July 2021 | None | | | |
| CN | 112966687 | A | 15 June 2021 | None | | | |
| CN | 113538441 | A | 22 October 2021 | None | | | |
| CN | 113591566 | A | 02 November 2021 | None | | | |
| WO | 2020192471 | A1 | 01 October 2020 | JP | 2022505775 | A | 14 January 2022 |
| | | | | CN | 109784424 | A | 21 May 2019 |
| | | | | US | 2021241109 | A1 | 05 August 2021 |
| | | | | KR | 20210072051 | A | 16 June 2021 |
| | | | | EP | 3951654 | A1 | 09 February 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111328774